# EUROPÄISCHE PATENTSCHRIFT

(11) **EP 0 389 772 B1**
(45) Veröffentlichungstag und Bekanntmachung des Hinweises auf die Patenterteilung: **11.08.1993**
(21) Anmeldenummer: 90102779.7
(22) Anmeldetag: 13.02.1990
(51) Int. Cl.: B41J 3/46

(54) **Einrichtung zur Erzeugung und/oder zum Bedrucken von Formularen**
Device for generating and/or printing forms
Appareil pour la production et/ou l'impression des formulaires

(30) Priorität: 28.03.1989 DE 3910077
(43) Veröffentlichungstag der Anmeldung: 03.10.1990
(73) Patentinhaber: AEG Olympia Office GmbH, 26357 Wilhelmshaven (DE)
(72) Erfinder: Folkens, Dieter, D-2935 Bockhorn (DE); Endres, Wolfgang, D-2940 Wilhelmshaven (DE)

(56) Entgegenhaltungen:
- DE-A- 3 233 839
- DE-A- 3 501 803
- PATENT ABSTRACTS OF JAPAN, Band 12, Nr. 190 (M-704)[3037], 3. Juni 1988; JP-A-62 299 369 (HITACHI LTD) 26-12-1986

## Beschreibung

Die Erfindung betrifft eine Einrichtung zur Erzeugung und/oder zum Bedrucken von Formularen der im Oberbegriff des Patentanspruchs 1 angegebenen Art.

Textbearbeitungsmaschinen sind vielfach mit einer Anzeigeeinrichtung versehen, auf der die Zeichen mindestens eines Textzeilenabschnittes dargestellt werden können. Mittels einer Tastatur der Maschine eingegebene Zeichen werden in einem Textspeicher abgelegt und sogleich auf der Anzeigeeinrichtung dargestellt, ohne daß eine Tätigkeit des Schreibwerkes und ein Ausschreiben der eingegebenen Zeichen erfolgt. Dadurch ist eine Kontrolle des eingegebenen Textes und gegebenenfalls eine Korrektur durch Neueingabe möglich. Ein Ausschreiben der eingegebenen Zeichen erfolgt nach Betätigung einer besonderen Taste, automatisch am Zeilenende oder beim Auftreten anderer besonderer Kriterien, z. B. bei Betätigung einer Leertaste nach einem eingegebenen Wort.

Ein solcher verzögerter Ausschreibevorgang ist für normale Texteingabe akzeptabel, er führt jedoch beim Beschriften von Formularen und ähnlichen Vordrucken für den Bediener zu erheblichen Schwierigkeiten, weil ihm die Anzeigeeinrichtung keine Kontrollmöglichkeit über die jeweilige Stelle auf dem Aufzeichnungsträger bietet, an der die in den Speicher eingegebenen Zeichen zur Ausschreibung gelangen werden. Auch die Feststellung, ob und wann der Raum einer Formularspalte aufgebraucht ist, ließe sich allenfalls durch Zählen der Zeichen treffen.

Aus der DE-A1 32 29 590 ist es bereits bekannt, zum Ausfüllen eines bereits vorhandenen Formulares, das beispielsweise in einem Drucker der Textstation eingespannt ist, an denjenigen Stellen an der Anzeigeeinrichtung, die dem Anfang und/oder dem Ende jeweils eines zu beschreibenden variablen Feldes auf dem Formular entsprechen, Markierungen darzustellen, um dem Benutzer an der Anzeigeeinrichtung eine Orientierungshilfe zu geben. Zusätzlich können an der Anzeigeeinrichtung in geschützten Feldern erklärende Texte dargestellt werden, die jeweils angeben, was in dem entsprechenden auszufüllenden Bereich eingetragen werden soll. Diese geschützten Felder sind durch den Benutzer nicht ohne weiteres beschreibbar. Beim Ausdrucken des Inhaltes des Bildschirms der Anzeigeeinrichtung auf das Formular werden dort die Texte der geschützten Felder und die Markierungen nicht ausgedruckt. Dieses bekannte Verfahren ist außerdem ausschließlich für das Ausfüllen von bereits in gedruckter Form vorliegenden Formularen geeignet. Es eignet sich aber nicht für das Erstellen von Formularen.

Der Erfindung liegt daher die Aufgabe zugrunde, eine Einrichtung zur Erzeugung und/oder zum Bedrucken von Formularen zu schaffen, mittels der auf einfache Weise Formulare mittels der Textstation bedruckt und/oder erstellt werden können. Diese Aufgabe wird durch die im Patentanspruch 1 gekennzeichnete Erfindung gelöst.

Durch die Einrichtung ist es möglich, die Position des Bildschirmcursors auf einem zu beschreibenden Formularvordruck mittels eines Leuchtpunktes sichtbar zu machen. Dabei kann jede von dem angeschlossenen Drucker realisierbare Schriftteilung verwendet werden. Ein weiterer Vorteil liegt darin, daß erstmals auf Rechnersystemen mit herkömmlichen groben Bildschirmen vorgedruckte Formulare ausgefüllt werden können und auch das Entwerfen von Formularen auf dem Bildschirm stark erleichtert wird.

Weitere vorteilhafte Ausgestaltungen sind den weiteren Unteransprüchen zu entnehmen.

Die Erfindung wird anhand von Ausführungsbeispielen im folgenden näher beschrieben. Es zeigen:
- Figur 1: eine schaubildliche Darstellung einer Textstation,
- Figur 2: eine erste Ausführungsform einer Positioniereinheit für eine Positionsmarke und
- Figur 3: eine zweite Ausführungsform einer Positioniereinheit mit der Positionsmarke.

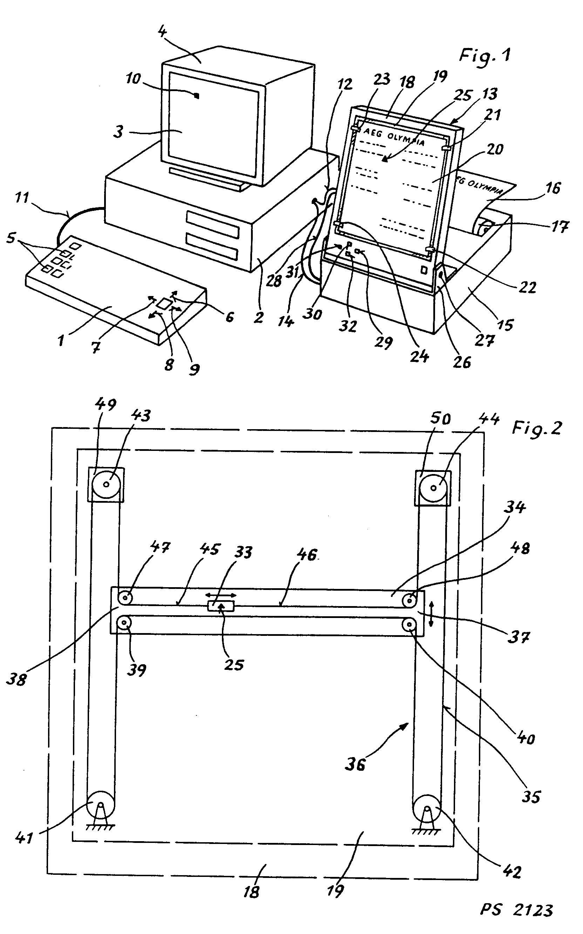

In der Figur 1 ist eine Einrichtung zur Erzeugung und/oder zum Bedrucken von Formularen mit zu bedruckenden und nicht zu bedruckenden Feldern mittels einer Textstation dargestellt, bei der mit Hilfe einer Tastatur 1 eingegebenen und in einem Arbeitsspeicher eines Rechners 2 abgelegte Zeichen auf einem Bildschirm 3 einer Anzeigeeinrichtung 4 dargestellt werden. Die Tastatur weist in bekannter Weise alphanumerische Tasten 5 und Positioniertasten 6, 7, 8 und 9 auf, durch die ein Cursor 10 auf dem Bildschirm 3 in bekannter Weise verstellt werden kann. Die Tastatur 1 ist übrigens über ein Kabel 11 mit dem Rechner 2 verbunden. Der Rechner 2 wiederum ist über ein Kabel 12 mit einer Positioniereinheit 13 und über ein Kabel 14 mit einem Drucker 15 verbunden. Der Drucker 15 dient in bekannter Weise zum Bedrucken eines Formulares 16, wobei die zum späteren Ausdruck vorgesehenen Zeichen aus einem Arbeitsspeicher ausgelesen werden. Der Transport der Formulare 16 erfolgt über eine Antriebswalze 17, die über einen nicht dargestellten Antriebsmotor antreibbar ist.

Die Positioniereinheit 13 weist einen Rahmen 18 auf, in dem eine transparente Auflageplatte 19, auf das ein Formular 20 auflegbar ist. Eine synchron mit dem Cursor 10 auf dem Bildschirm 3 bewegbare und als Lichtpunkt ausgebildete Positionsmarke 25 ist unterhalb der Auflageplatte 19 in Zeilen- und Spaltenrichtung und parallel zur Auflageplatte 19 verfahrbar gelagert. Die Positioniereinheit 13 steht übrigens über Kabel 12 und 28 zur mit dem Rechner 2 der Textstation als auch mit dem Drucker 15 in Wirkverbindung.

Die Formulare 20 werden übrigens durch mit dem Rahmen 18 verbundenen Klammern 21, 22, 23, 24 auf der Auflageplatte 19 fixiert gehalten. Unterhalb der Auflageplatte 19 weist die Positioniereinheit 13 in dem Rahmen 18 noch Positioniertasten 28, 29, 30, 31 auf, durch die die Positionsmarke 25 beliebig auf der Auflageplatte 19 verschiebbar ist.

Gemäß Figur 1 ist die Positioniereinheit 13 dadurch auf der Oberseite des Druckwerks 15 schwenkbar angeordnet, daß das Druckwerk Lagerböcke 26 mit Lagerbohrungen für Lagerzapfen 27 an der Positioniereinheit 13 aufweist. Im Rahmen der Erfindung ist es selbstverständlich auch möglich, daß die Positioniereinheit 13 und der Drucker 15 getrennt angeordnet sind.

In der Figur 2 ist die als Lichtpunkt ausgebildete Positionsmarke 25 auf einem Schlitten 33 fest angeordnet, der auf einem in Zeilenrichtung ausgerichteten, schienenförmig ausgebildeten Träger 34 durch einen Antrieb in Zeilenrichtung verschiebbar gelagert ist. Der Träger 34 ist in Spaltenrichtung durch einen Antrieb derart verschiebbar, daß die Positionsmarke 25 in X- und Y-Richtung unterhalb der Auflageplatte 19 zur Darstellung der Cursorpositionen des Cursors 10 auf dem Formularblatt 20 bewegbar angeordnet ist. Der Träger 34 und der auf diesem bewegbar gelagerte Schlitten 33 sind durch einen einzigen Seilantrieb einzeln oder gemeinsam verstellbar. Zu diesem Zweck ist das Seil 35 des Seilantriebs 36 über an den Enden 37, 38 des Trägers 34 angeordnete Umlenkrollen 39, 40 zu zwei im Bereich der unteren Ecken der Auflageplatte 19 leitbar. Von diesen Umlenkrollen 41, 42 gelangt das Seil dann zu zwei im Bereich der oberen Ecken der Auflageplatte 19 angeordnete Umlenkrollen 43, 44. Die von diesen oberen Umlenkrollen 42, 44 kommenden Seilenden 45, 46 sind über je eine weitere Umlenkrolle 47, 48 an den Enden 37, 38 des Trägers 34 zu dem Schlitten 33 umlenkbar und sind an dem Schlitten 33 befestigt. Zum Verstellen des Schlittens 33 ist es erforderlich, daß auf jeder Seite der Auflageplatte 19 eine der beiden Umlenkrollen 42, 44; 41, 43 durch einen Antriebsmotor antreibbar sind. Gemäß Figur 2 sind die Umlenkrollen 43, 44 durch je einen Antriebsmotor 49, 50 antreibbar.

Werden beide Antriebsmotoren 49, 50 in gleicher Drehrichtung um den gleichen Schrittwinkel gedreht, so wird der Schlitten 33 um einen bestimmten Weg horizontal verschoben. Drehen dagegen die beiden Motoren 49, 50 in entgegengesetzten Drehrichtungen, so wird der Träger 34 vertikal bewegt. Durch einfache Ansteuerung der beiden Antriebsmotore 49, 50 ist es also möglich, die Positionsmarke 25 beliebig unter der Auflageplatte 19 zu verschieben. Die entsprechenden Antriebsimpulse erhalten die Antriebsmotore 49, 50 von dem Rechner 2, der die Steuerbefehle entweder von der Tastatur 1 oder von den Positioniertasten 29, 30, 31, 32 erhält.

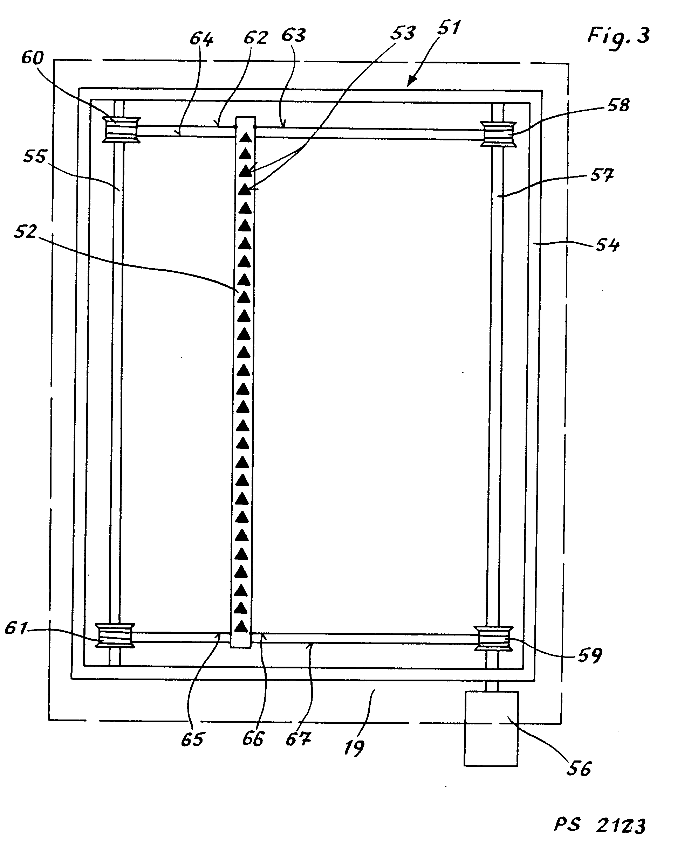

In der Figur 3 ist eine zweite Ausführungsform einer Positioniereinheit dargestellt, wobei die Positioniereinheit 51 unterhalb der Auflageplatte 19 einen in Zeilenrichtung durch einen Antrieb verschiebbaren Schlitten 52 aufweist, der in Spaltenrichtung für jede Zeile mit einer Positionsmarke 53 versehen ist. Die Anzahl der Positionsmarken 53 entspricht also der höchst möglichen Anzahl der Zeilen auf der Auflageplatte 19. Die Positioniereinheit 51 weist unterhalb der Auflageplatte 19 einen Rahmen 54 auf, in dem entlang der einen Längsseite der Auflageplatte 19 eine Achse 55 und entlang der anderen Längsseite eine durch einen Antriebsmotor 56 antreibbare Antriebswelle 57 gelagert sind. Mit der Antriebswelle 57 sind zwei Seilrollen 58, 59 fest verbunden, während auf der Achse 55 zwei Seilrollen 60, 61 frei drehbar gelagert sind. Die freien Enden 62, 63 des Seils 64 und die freien Enden 65, 66 des Seils 67 sind mit dem Schlitten 52 fest verbunden. Der Rahmen 54 ist auf der dem Bediener zugewandten Seite mit der aus einer Glasplatte bestehenden Auflageplatte 19 abgedeckt, auf die das zu bedruckenden Formular aufgespannt wird. Die Horizontalbewegungen der als Lichtpunkt ausgebildeten Positionsmarke 53 werden durch den Antriebsmotor 56 bewirkt, während der vertikale Zeilensprung durch Umschalten auf eine nächste Positionsmarke 53 erzeugt wird. Halbzeilenschaltungen können entweder durch vertikales Verschieben des Schlittens 52 oder durch Einschalten von zwei Positionsmarken 53 dargestellt werden.

Die Positionsmarken 25, 53 sind lichtstrahlungsemittierend ausgebildet und bestehen z. B. aus Leuchtdioden. In vorteilhafter Ausgestaltung weisen die Leuchtdioden 25, 53 eine dreieckförmige Austrittsfläche auf.

Wird über die Tastatur 1 ein Text eingegeben, so wandert der Cursor 10 auf dem Bildschirm 3 entsprechend der Zeichenzahl von links nach rechts. Synchron dazu bewegt sich die als Lichtpunkt ausgebildete Positionsmarke 25 auf dem Formular 20, das auf der Auflageplatte 19 mittels der Klammern 21, 22, 23, 24 arretiert angeordnet ist. Bei Betätigung der Returntaste oder beim Erreichen der vorgewählten rechten Randmarkierung läuft der Cursor 10 an den linken Rand und springt gleichzeitig eine Zeile tiefer. Genauso verhält sich die Positionsmarke 25. Um die Cursorpositionen an die Positioniereinheit übergeben zu können, muß selbstverständlich ein Treiberprogramm in dem Rechner 2 aktiviert werden. Aufgabe dieses Programms ist es, die Änderung der Cursorposition, die Wahl der Schriftart sowie der Teilung über eine Schnittstelle an die Positioniereinheit zu melden. Dies kann entweder über eine zusätzliche Schnittstelle oder über die normale Druckerschnittstelle geschehen, wobei dann der Drucker an die Positioniereinheit angeschlossen werden muß. Das Treiberprogramm muß übrigens so ausgelegt sein, daß nur die Cursorschritte von der Positioniermarke 25 der Positioniereinrichtung angezeigt werden, die auch vom Drucker ausgeführt werden sollen und nicht die Steuerzeichen.

Um ein Formular auszufüllen, muß die die Tastatur bedienende Person zunächst die Positionsmarke 25 durch Betätigen der Leertaste, der Tab-Taste oder der Cursortasten 29, 30, 31, 32 an die Stelle des Formulars 20 bringen, an der ein Text eingefügt werden soll.

Beim Ausdruck des endgültigen Formulares 16 muß in den Drucker entweder ein vorgedrucktes Formular eingelegt, oder ein entsprechendes gespeichertes Muster aufgerufen werden.

Beim Ausfüllen vorgedruckter Formulare gibt die als Leuchtpunkt ausgebildete Positionsmarke die jeweilige Cursorposition auf dem Formular auf einfachste Weise wieder. Jede Zeichenposition wird exakt dargestellt, wobei unterschiedliche Schriftteilungen berücksichtigt werden. Hierdurch können also auf Rechnersystemen mit herkömmlichen groben Bildschirmen vorgedruckte Formulare ausgefüllt werden. Für diese Einrichtung können auch Formulare neu erstellt werden, wobei es sich vorteilhaft auswirkt, daß das ganze Blatt sichtbar ist. Ebenso lassen sich vorgegebene Formulare mit dieser Einrichtung sehr leicht ändern.

## Patentansprüche

1. Einrichtung zur Erzeugung und/oder zum Bedrucken von Formularen mit zu bedruckenden und nicht zu bedruckenden Feldern mittels einer Textstation, bei der mit Hilfe einer Tastatur eingegebene und in einem Arbeitsspeicher eines Rechners abgelegte Zeichen auf einem Bildschirm einer Anzeigeeinrichtung dargestellt werden und mit einem Drucker zum späteren Ausdrucken der aus dem Arbeitsspeicher gelesenen Zeichen auf dem Formular, **gekennzeichnet durch** eine Positioniereinheit mit einer transparenten Auflageplatte (19), auf der das Formular (20) auflegbar ist, und einer synchron mit dem Cursor (10) auf dem Bildschirm (3) bewegbaren, als Lichtpunkt ausgebildeten Positionsmarke (25), die unterhalb der Auflageplatte (19) in Spalten- und Zeilenrichtung und parallel zur Auflageplatte (19) verfahrbar gelagert ist, wobei die Positioniereinheit (13) über Kabel (12, 28) sowohl mit dem Rechner (2) der Textstation als auch mit dem Drucker (15) verbunden ist.

2. Einrichtung nach Anspruch 1, **dadurch gekennzeichnet,** daß die als Lichtpunkt ausgebildete Positionsmarke (25) auf einem Schlitten (33) fest angeordnet ist, der auf einem in Zeilenrichtung ausgerichteten, schienenförmig ausgebildeten Träger (34) durch einen Antrieb in Zeilenrichtung verschiebbar gelagert ist, und daß der Träger (34) in Spaltenrichtung durch einen Antrieb derart verschiebbar gelagert ist, daß die Positionsmarke (25) in X- und Y-Richtung unterhalb der Auflageplatte (19) zur Darstellung der Cursorpositionen auf dem Formularblatt (20) bewegbar angeordnet ist.

3. Einrichtung nach Anspruch 2, **dadurch gekennzeichnet,** daß der Träger (34) und der auf diesem bewegbare Schlitten (33) durch einen einzigen Seilantrieb einzeln oder gemeinsam verstellbar sind.

4. Einrichtung nach Anspruch 3, **dadurch gekennzeichnet,** daß das Seil (35) des Seilantriebes (36) über an den Enden (37, 38) des Trägers (34) angeordnete Umlenkrollen (39, 40) zu zwei im Bereich der unteren Ecken der Auflageplatte (19) gelagerte Umlenkrollen (41, 42) leitbar und von diesen über zwei im Bereich der oberen Ecken der Auflageplatte (19) angeordnete Umlenkrollen (43, 44) herumführbar, daß die von den oberen Umlenkrollen (43, 44) kommenden Seilenden (45, 46) über je eine weitere Umlenkrolle (47, 48) an den Enden (37 , 38) des Trägers (34) zu dem Schlitten (33) umlenkbar und an diesem befestigt sind, und daß auf jeder Seite der Auflageplatte (19) eine der beiden Umlenkrollen (42, 44; 41, 43) durch einen Antriebsmotor antreibbar ist.

5. Einrichtung nach Anspruch 4, **dadurch gekennzeichnet,** daß die beiden in den oberen Ecken der Auflageplatte (19) angeordneten Umlenkrollen (43, 44) durch je einen Antriebsmotor (49, 50) antreibbar sind.

6. Einrichtung nach Anspruch 1, **dadurch gekennzeichnet,** daß die Positioniereinheit (51) unterhalb der Auflageplatte (19) einen in Zeilenrichtung durch einen Antrieb verschiebbaren Schlitten (52) aufweist, der in Spaltenrichtung für jede Zeile mit einer Positionsmarke (53) versehen ist.

7. Einrichtung nach Anspruch 6, **dadurch gekennzeichnet,** daß die Positioniereinheit (51) unterhalb der Auflageplatte (19) einen Rahmen (54) aufweist, in dem entlang der einen Längsseite der Auflageplatte (19) eine Achse (55) und entlang der anderen Längsseite eine durch einen Antriebsmotor (56) antreibbare Antriebswelle (57) gelagert sind, daß mit der Antriebswelle (57) zwei Seilrollen (58, 59) fest verbunden und auf der Achse (55) zwei Umlenkrollen (60, 61) frei drehbar gelagert sind, und daß die freien Enden (62, 63; 65, 66) der von den Seilrollen (58, 59) angetriebenen und über die Umlenkrollen (60, 61) umgelenkten Seile (64, 67) an dem in Zeilenrichtung verschiebbaren Schlitten (52) befestigt sind.

8. Einrichtung nach einem der vorhergehenden Ansprüche, **dadurch gekennzeichnet,** daß die Positionsmarken lichtstrahlungsemittierend ausgebildet sind.

9. Einrichtung nach Anspruch 8, **dadurch gekennzeichnet,** daß die Positionsmarken aus Leuchtdioden bestehen.

10. Einrichtung nach Anspruch 9, **dadurch gekennzeichnet,** daß die Leuchtdioden (25, 53) eine dreieckförmige Austrittsfläche aufweisen.

11. Einrichtung nach einem der vorhergehenden Ansprüche, **dadurch gekennzeichnet,** daß die Positioniereinheit (13) auf der Oberseite des Druckwerks (15) schwenkbar angeordnet ist.

12. Einrichtung nach einem der vorhergehenden Ansprüche, **dadurch gekennzeichnet,** daß die Positioniereinheit (13) unterhalb der Auflageplatte (19) Positioniertasten (29, 30, 31, 32) zum Einstellen des Schlittens (33) bzw. der Positionsmarke (25) aufweist.

## Claims

1. Device for the production of and/or for printing-on forms having fields that are to be printed-on and fields that are not to be printed-on by means of a text station, in which characters typed-in with the aid of a keyboard and stored in a working memory of a computer are displayed on a screen of a display device and with a printer, for the subsequent printing-out onto the form of the characters read out from the working memory, characterised by, a positioning unit having a transparent support plate (19) upon which the form (20) can be laid, and a position marker (25) which is forced as a point of light that is movable in synchronism with the cursor (10) on the screen (3) and which is mounted below the support plate (19) and can be acted upon in the direction of the columns and rows and parallel to the support plate (19), wherein the positioning unit (13) is connected via cables (12, 28) both to the computer (2) of the text station as well as to the printer (15).

2. Device in accordance with Claim 1, characterised in that, the position marker (25) which is formed as a point of light is fixedly arranged on a carriage (33) which is mounted on a carrier (34) that is formed in the shape of a rail and orientated in the direction of the rows and which is displaceable by a driving means in the row direction, and that the carrier (34) is mounted to be displaceable in the column direction by a driving means in such a way that the position marker (25) is arranged to be movable in the X- and Y-directions below the support plate (19) for the representation of the positions of the cursor on the form sheet (20).

3. Device in accordance with Claim 2, characterised in that, the carrier (34) and the carriage (33) movable thereon are adjustable individually or together by a single cord drive.

4. Device in accordance with Claim 3, characterised in that, the cord (35) of the cord drive (36) is guidable over pulleys (39, 40) arranged at the ends (37, 38) of the carrier (34) to two pulleys (41, 42) mounted in the vicinity of the bottom corners of the support plate (19) and is guidable from the latter over two pulleys (43, 44) arranged in the vicinity of the upper corners of the support plate (19), that the cord ends (45, 46) coming from the upper pulleys (43, 44) are each deflectable over a further pulley (47, 48) at the ends (37, 38) of the carrier (34) to the carriage (33) and are attached thereto, and that one of the two pulleys (42, 44; 41, 43) at each side of the support plate (19) is drivable by a drive motor.

5. Device in accordance with Claim 4, characterised in that, the two pulleys (43, 44) arranged in the upper corners of the support plate (19) are each drivable by a drive motor (49, 50).

6. Device in accordance with Claim 1, characterised in that, below the support plate (19), the positioning unit (51) has a carriage (52) which is provided with a position marker (53) for each row in the column direction and which is displaceable in the row direction by a drive means.

7. Device in accordance with Claim 6, characterised in that, the positioning unit (51) has a frame (54) below the support plate (19) in which an axle (55) is mounted along the one long side of the support plate (19) and a drive shaft (57) drivable by a drive motor (56) is mounted along the other long side, that two cord pulleys (58, 59) are rigidly connected to the drive shaft (57) and two pulleys (60, 61) are freely rotatably mounted on the axle (55), and that the free ends (62, 63; 65, 66) of the cords (64, 67) driven by the cord pulleys (58, 59) and deflected over the pulleys (60, 61) are attached to the carriage (52) displaceable in the row direction.

8. Device in accordance with any of the preceding Claims, characterised in that, the position markers are formed to be light beam emitting.

9. Device in accordance with Claim 8, characterised in that, the position markers consist of light emitting diodes.

10. Device in accordance with Claim 9, characterised in that, the light emitting diodes (25, 53) have a triangularly shaped emitting surface.

11. Device in accordance with any of the preceding Claims, characterised in that, the positioning unit (13) is arranged pivotably on the upper side of the printing mechanism (15).

12. Device in accordance with any of the preceding Claims, characterised in that, the positioning unit (13) has positioning keys (29, 30, 31, 32) below the support plate (19) for the setting of the carriage (33) or the position marker (25).

## Revendications

1. Dispositif pour confectionner et/ou pour imprimer, au moyen d'un poste de traitement de texte, des formulaires comprenant des zones devant être imprimées et des zones ne devant pas être imprimées, dispositif dans lequel des signes, entrés à l'aide d'un clavier et stockés dans une mémoire de travail d'un ordinateur, sont représentés sur l'écran d'un dispositif de visualisation, avec une imprimante pour la restitution imprimée ultérieure, sur le formulaire, des signes extraits de la mémoire de travail, caractérisé par une unité de positionnement munie d'une plaque d'appui transparente (19) sur laquelle le formulaire (20) peut être placé, et d'un repère de positions (25), conçu comme un point lumineux, mobile sur l'écran (3) en synchronisme avec le curseur (10), et monté déplaçable au-dessous de la plaque d'appui (19) dans la direction des lignes et des colonnes, et parallèlement à la plaque d'appui (19), l'unité de positionnement (13) étant connectée, par l'intermédiaire de câbles (12, 28), tant à l'imprimante (15) qu'à l'ordinateur (2) du poste de traitement de texte.

2. Dispositif selon la revendication 1, caractérisé par le fait que le repère de positions (25) conçu comme un point lumineux est installé de manière fixe sur un chariot (33), qui est monté à coulissement dans la direction des lignes, par l'intermédiaire d'un entraînement, sur un support (34) réalisé en forme de rail et orienté dans la direction des lignes ; et par le fait que le support (34) est monté à coulissement dans la direction des colonnes, au moyen d'un entraînement, de telle sorte que le repère de positions (25) soit agencé avec mobilité dans la direction des X et des Y, au-dessous de la plaque d'appui (19), afin de représenter les positions du curseur sur le formulaire (20).

3. Dispositif selon la revendication 2, caractérisé par le fait que le support (34), et le chariot (33) monté mobile sur ce dernier, sont déplaçables individuellement ou conjointement par l'intermédiaire d'un seul et unique entraînement par câble.

4. Dispositif selon la revendication 3, caractérisé par le fait que le câble (35) de l'entraînement (36) par câble peut être dirigé, par l'entremise de galets de renvoi (39, 40) implantés aux extrémités (37, 38) du support (34), vers deux galets de renvoi (41, 42) montés dans la région des coins inférieurs de la plaque d'appui (19), galets à partir desquels il peut être transféré autour de deux galets de renvoi (43, 44) disposés dans la région des coins supérieurs de la plaque d'appui (19) ; par le fait que les extrémités (45, 46) du câble, provenant des galets supérieurs de renvoi (43, 44), peuvent être renvoyées au chariot (33), respectivement par l'intermédiaire d'un galet supplémentaire de renvoi (47, 48) situé aux extrémités (37, 38) du support (34), et sont fixées audit chariot ; et par le fait que, de chaque côté de la plaque d'appui (19), l'un des deux galets de renvoi (42, 44 ; 41, 43) peut être mené par un moteur d'entraînement.

5. Dispositif selon la revendication 4, caractérisé par le fait que les deux galets de renvoi (43, 44), disposés dans les coins supérieurs de la plaque d'appui (19), peuvent être menés par un moteur d'entraînement respectif (49, 50).

6. Dispositif selon la revendication 1, caractérisé par le fait que l'unité de positionnement (51) présente, au-dessous de la plaque d'appui (19), un chariot (52) qui peut être animé d'un coulissement dans la direction des lignes, par l'intermédiaire d'un entraînement, et est pourvu d'un repère de positions (53) pour chaque ligne dans la direction des colonnes.

7. Dispositif selon la revendication 6, caractérisé par le fait que l'unité de positionnement (51) comporte, au-dessous de la plaque d'appui (19), un cadre (54) dans lequel un axe (55) est monté le long de l'un des côtés longitudinaux de la plaque d'appui (19), et un arbre menant (57), pouvant être mené par un moteur d'entraînement (56), est monté le long de l'autre côté longitudinal ; par le fait que deux poulies (58, 59) sont assujetties à l'arbre menant (57), et deux galets de renvoi (60, 61) sont calés à rotation libre sur l'axe (55) ; et par le fait que les extrémités libres (62, 63 ; 65, 66) des câbles (64, 67) entraînés par les poulies (58, 59), et renvoyés par les galets de renvoi (60, 61), sont fixées au chariot (52) pouvant coulisser dans la direction des lignes.

8. Dispositif selon l'une des revendications précédentes, caractérisé par le fait que les repères de positions sont conçus pour émettre des rayonnements lumineux.

9. Dispositif selon la revendication 8, caractérisé par le fait que les repères de positions consistent en des diodes électroluminescentes.

10. Dispositif selon la revendication 9, caractérisé par le fait que les diodes électroluminescentes (25, 53) possèdent une surface triangulaire de sortie.

11. Dispositif selon l'une des revendications précédentes, caractérisé par le fait que l'unité de positionnement (13) est installée à pivotement sur la face supérieure du mécanisme d'impression (15).

12. Dispositif selon l'une des revendications précédentes, caractérisé par le fait que l'unité de positionnement (13) présente, au-dessous de la plaque d'appui (19), des touches de positionnement (29, 30, 31, 32) pour le réglage respectif du chariot (33) ou du repère de positions (25).
